Europäisches Patentamt

(19) European Patent Office

Office européen des brevets

(11) Veröffentlichungsnummer: **0 114 618**
**B1**

(12) EUROPÄISCHE PATENTSCHRIFT

(45) Veröffentlichungstag der Patentschrift:
22.04.87

(21) Anmeldenummer: 84100279.3

(22) Anmeldetag: 12.01.84

(51) Int. Cl.⁴: **F 02 M 35/10**, F 02 B 27/00

(54) Gegossene Luftansauganlage für Brennkraftmaschinen, insbesondere in Druckgussausführung.

(30) Priorität: 14.01.83 DE 3301078
14.01.83 DE 3301080

(43) Veröffentlichungstag der Anmeldung:
01.08.84 Patentblatt 84/31

(45) Bekanntmachung des Hinweises auf die Patenterteilung:
22.04.87 Patentblatt 87/17

(84) Benannte Vertragsstaaten:
AT DE FR GB IT SE

(56) Entgegenhaltungen:
EP - A - 0 005 933
EP - A - 0 024 606
DE - A - 2 527 774
FR - A - 2 384 120

AUTOMOBILTECHNISCHE ZEITSCHRIFT, Band 84, Nr. 6, Juni 1982, Seite 306, Schwäbisch Gmünd, DE; "Sauganlage eines Sechszylinder-Einspritzmotors für Personenwagen"
AUTOMOBILTECHNISCHE ZEITSCHRIFT, Band 82, Nr. 11, November 1980, Seiten 553-557, Schwäbisch Gmünd, DE; A. KOEWIUS: "Zum Stand der Aluminiumanwendung im Automobil vor dem Hintergrund der Kraftstoff-Verbrauchssenkung am Beispiel der USA"

(73) Patentinhaber: **BAYERISCHE MOTOREN WERKE Aktiengesellschaft, Postfach 40 02 40 Petuelring 130 - AJ-36, D-8000 München 40 (DE)**

(72) Erfinder: **Gartner, Jurij, Parsbergstrasse 12, D-8034 Germering (DE)**

(74) Vertreter: **Schweiger, Erwin, c/o Bayerische Motoren Werke AG - AJ-35 Postfach 40 02 40 Petuelring 130, D-8000 München 40 (DE)**

ACTORUM AG

## Beschreibung

Die Erfindung geht im Oberbegriff des unabhängigen Patentanspruches von der DE-A 2 527 774 aus.

Bei der bekannten Bauart schliessen die Anfangsbereiche aller Einzelsaugrohre in einer mit diesen gemeinsamen Ebene am Verteilergehäuse an. Das ergibt bei im wesentlichen parallel und überschneidungsfrei sowie eng benachbart zu den Anschlüssen hin verlaufenden Einzelsaugrohren, dass die entgegengesetzt am Verteilergehäuse angeschlossenen Anfangsbereiche der äusseren Einzelsaugrohre für den ersten und letzten Einlasskanal der Maschine von dieser maschinenfern für die gewünschte Schwingrohrlänge angeordnet sind. Diese äusseren Einzelsaug- bzw. Schwingrohre bestimmen im wesentlichen den Bauraum der Luftansauganlage in Breite und Länge.

Durch die maschinennäheren Abstände der Anfangsbereiche der nächstinneren Einzelsaugrohre lassen sich für diese nur in Verbindung mit engen Mündungsabständen ohne Einlaufradien etwa gleiche Schwingrohrlängen erreichen. Mit der bekannten Art der Anschlussanordnung der Einzelsaugrohre an das Verteilergehäuse lassen sich vorteilhafte Einlaufausbildungen für die Einzelsaugrohre der Luftansauganlage nicht verwirklichen.

Der Erfindung liegt die Aufgabe zugrunde, für die Einzelsaugrohre eine Anschlussanordnung an das Verteilergehäuse aufzuzeigen, die bei in Breite und Länge etwa gleichem Bauraum der gegossenen Luftansauganlage sowohl günstige Einströmbedingungen als auch für alle Einzelsaugrohre exakt gleiche Längen zulässt. Weiter soll die Luftansauganlage auch in Druckguss ausführbar sein, wobei der Arbeitsaufwand für eine feste und luftdichte Verbindung beider Druckgusshälften gering gehalten sein soll.

Diese Aufgabe wird mit den im Kennzeichen des unabhängigen Patentanspruches angegebenen Merkmalen gelöst. Mit der im ersten Kennzeichenmerkmal beschriebenen Auffächerung der Einzelsaugrohre können die Anfangsbereiche der inneren Einzelsaugrohre relativ zu denen der äusseren Einzelsaugrohre quer zu ihrer Längserstreckung höhenversetzt und damit mit einem grösseren Abstand von der Maschine und zusätzlich mit relativ grossen Einlaufradien am Verteilergehäuse anschliessen. Mit der Auffächerung der Einzelsaugrohre quer zu der gemeinsamen Mittelebene der Schlussbereiche der Einzelsaugrohre werden dabei die Abstände der Anfangsbereiche der inneren Einzelsaugrohre zur Maschine bzw. zu den jeweiligen Anschlüssen für die Einlasskanäle zunehmend grösser, so dass bogenförmige Zwischenbereiche vorteilhafterweise mit grösseren Radien und damit grösserer Länge bei in Breite und Länge unverändertem Bauraum der Luftansauganlage unterzubringen sind. Zwar ist aus der DE-C 2 753 751 eine Luftansauganlage mit aufgefächert angeordneten Einzelsaugrohren bekannt. Da hierbei die äusseren Einzelsaugrohre zur Maschine relativ nah und die innersten Einzelsaugrohre zur Maschine relativ entfernt am Verteilergehäuse anschliessen, ist hierbei kein überschneidungs- bzw. kreuzungsfreier Verlauf der Einzelsaugrohre – in Draufsicht der Luftansauganlage gesehen – gegeben und eine hinterschneidungsfreie Gussausformung nicht möglich.

Mit dem zweiten Kennzeichenmerkmal werden vorteilhafte Voraussetzungen für die Ausbildung der Luftansauganlage in Druckgussausführung mit insgesamt zwei Gussteilen geschaffen. Mit den letzten beiden Kennzeichenmerkmalen wird zusätzlich der Arbeitsaufwand durch Zwischenwände in aufgefächerten Bereichen der Einzelsaugrohre verringert, wobei zur luftdichten Verbindung diese an beiden Gussteilen angeordneten Zwischenwände zusätzlich geringstmöglich beabstandet sind. Das Mass des Abstandes kann sich vorteilhafterweise nach dem Mass des Warmschrumpfens eines der Gussteile richten. Damit sind zum einen bei zusammengebauten Druckgusshälften zwischen Paaren einander zugeordneter Anschlagflächen benachbarter Einzelsaugrohre in vorteilhafter Weise durch die eng benachbarten Zwischenwände Drosselstellen erreicht, die praktisch den Luftaustausch zwischen benachbarten Einzelsaugrohren unterbinden.

Werden zum anderen die Druckgusshälften unmittelbar nach der Entnahme aus der Gussform im warmen Zustand zu einer Luftansauganlage zusammengebaut, können die Zwischenwände durch Warmschrumpfen und/oder Warmverzug eines oder beider Gussteile zur gegenseitigen Anlage kommen und damit die beiden Gusshälften reib- bzw. kraftschlüssig zusammenhalten. Damit werden ohne weiteres Zutun besonders enge Drosselstellen erzeugt, so dass ohne zusätzliches Kleben oder Schweissen eine nahezu vollständige Abtrennung benachbarter Einzelsaugrohre erreicht wird. Das bedeutet weiter den Vorteil, dass die beiden Druckgusshälften lediglich entlang der äusseren und inneren Umfangs-Kontur der Luftansauganlage miteinander fest zu verbinden sind, so dass auch hierdurch der Fertigungsaufwand verringert ist.

Mit den Merkmalen des Anspruches 2 ist eine besonders wirkungsvolle Drosselung bzw. Abdichtung erreicht, wenn wenigstens eine von zwei einander gegenüberliegenden Zwischenwänden der Gussteile einen zur anderen Zwischenwand gerichteten Vorsprung zur Lagesicherung und/oder Abdichtung aufweist, der wegen der Ausformbarkeit der jeweiligen Druckgusshälfte an die jeweilige Anschlussfläche unmittelbar anschliesst.

Schliesslich sind im Bereich geringem Querversatzes, insbesondere zu Anfang der Auffächerung benachbarter Einzelsaugrohre, die Anschlussflächen nach den Merkmalen des Anspruches 3 in gemeinsamen Trennwänden der Einzelsaugrohre durch ein Abstandsmass gegeneinander stufenförmig abgesetzt, das etwa gleich dem Querversatz ist. Damit ist auch zwischen eng benachbarten Einzelsaugrohren ohne zusätzliche Verbindungsmittel mindestens eine ausreichende Abdichtung zwischen den Einzelsaugrohren erzielt, die weder dem Füllungsgrad der Maschine nachteilig noch das Schwingverhalten der angesaugten Ladung dämpfend beeinflusst.

In weiterer Ausgestaltung der Erfindung wird mit dem Anspruch 5 der Vorteil erreicht, dass die Druckgussteile ohne Zusatzmaterial durch Schmelzen benachbarter Zonen entlang zweier aufeinander liegender Anschlussflächen verschweisst werden können. Durch die stufenförmige Ausgestaltung ergibt sich beim Schweissen eine zur Wandstärke relativ geringe Schweisstiefe entsprechend der Breite der jeweiligen Anschlussflächen vor dem Schweissen, wodurch die Innenkonturen vor allem der Einzelsaugrohre einwandfrei erhalten bleiben. Die Ausgestaltung bietet sich daher besonders vorteilhaft für das Schweissen mit einem energiereichen Elektronen- oder Laserstrahl an. Insbesondere ist die stufenförmige Ausgestaltung besonders für das Tiefenschweissen mit Laser in der Zone zwischen den paarweise einander zugekehrten Anschlussflächen geeignet.

Ausführungsbeispiele der Erfindung sind in der Zeichnung dargestellt. Es zeigt:

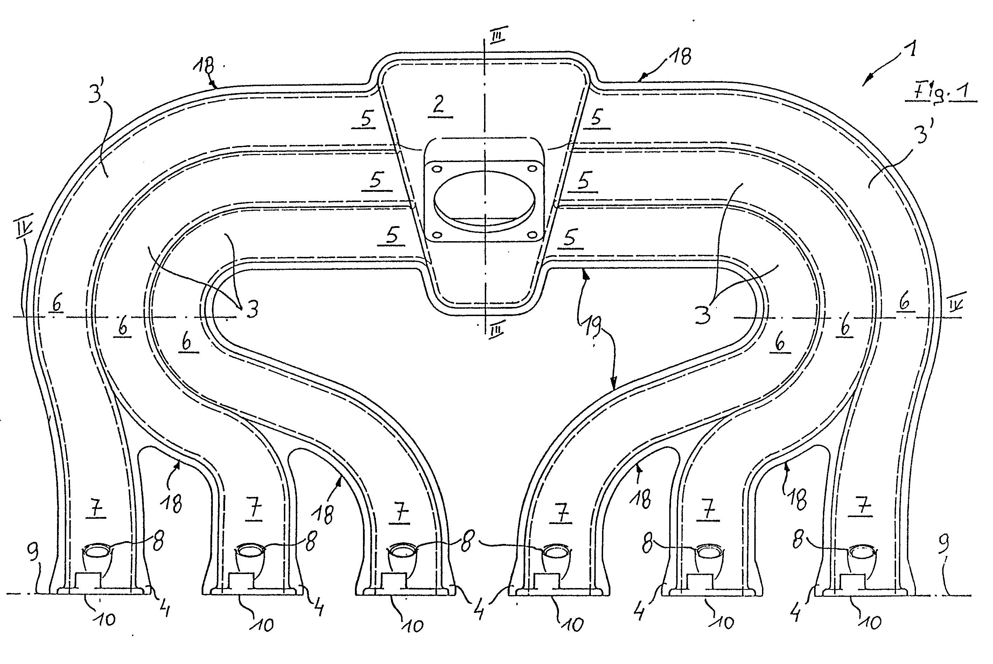

Fig. 1 die Draufsicht einer Luftansauganlage für eine Mehrzylinder-Reihenbrennkraftmaschine,

Fig. 2 die Stirnansicht der Luftansauganlage nach Fig. 1,

Fig. 3 die teilweise Stirnansicht der Luftansauganlage nach Fig. 1 mit dem Verteilergehäuse im Schnitt gemäss den Linien III-III in Fig. 1,

Fig. 4 die Seitenansicht der Luftansauganlage nach Fig. 1 mit Einzelsaugrohren im Schnitt gemäss den Linien IV-IV in Fig. 1 und

Fig. 5 die Einzelheit bei «A» vergrössert dargestellt,

Fig. 6 ein weiteres Ausführungsbeispiel mit zusätzlich stufenförmig abgesetzten Anschlussflächen an den Stossstellen der Druckgussteile entlang der Aussen-Kontur.

Eine gegossene Luftansauganlage 1 für eine nicht dargestellte Mehrzylinder-Reihenbrennkraftmaschine umfasst ein Verteilergehäuse 2 mit einstückig angeschlossenen Einzelsaugrohren 3, 3' zu Anschlüssen 4 für Einlasskanäle der Maschine. In Draufsicht gesehen, sind die äusseren Einzelsaugrohre 3' zum ersten und letzten Einlasskanal der Maschine maschinenfern und die übrigen, nächstinneren Einzelsaugrohre 3 jeweils entsprechend maschinennäher mit paarweise entgegengesetzten Anfangsbereichen 5 am Verteilergehäuse 2 angeschlossen. Die Anfangsbereiche 5 der – in Draufsicht gesehen – im wesentlichen parallel und überschneidungsfrei verlaufenden Einzelsaugrohre 3, 3' sind über bogenförmig gekrümmte Zwischenbereiche 6 mit zu den Anfangsbereichen 5 quergerichteten Schlussbereichen 7 zu den Anschlüssen 4 verbunden. Mit 8 sind Aufnahmen für nicht dargestellte Kraftstoff-Einspritzdüsen bezeichnet.

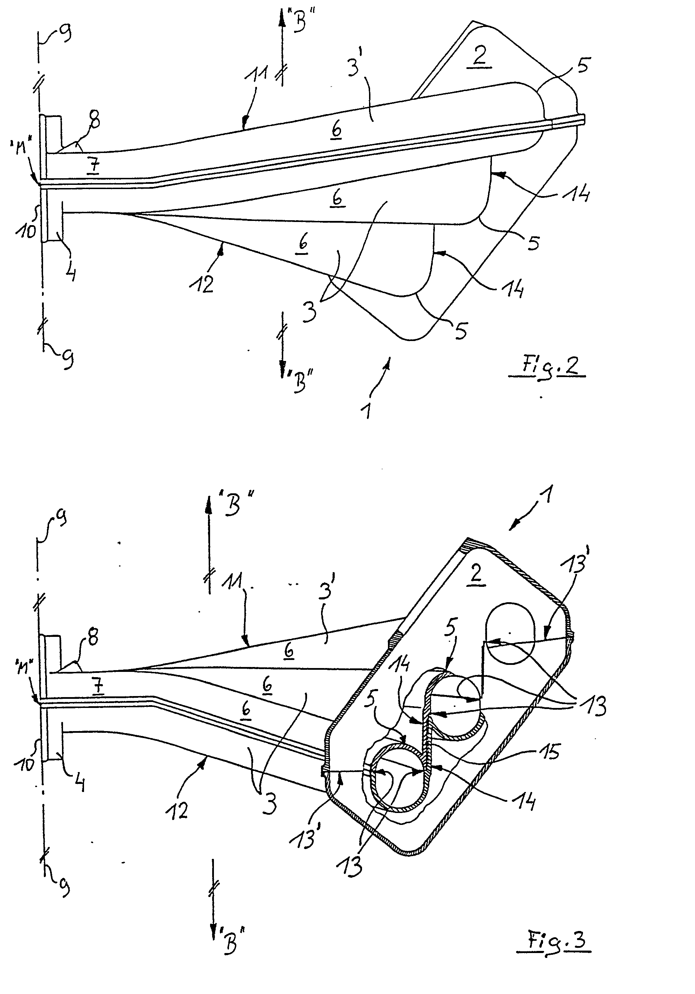

Wie die Fig. 2 und 3 jeweils in Stirnansicht zeigen, fächern sich die Einzelsaugrohre 3, 3' zum Verteilergehäuse 2 hin stetig auf, wodurch die Zwischenbereiche 6 und die Anfangsbereiche 5 untereinander quer zur Längserstreckung versetzt sind. Wie insbesondere Fig. 3 deutlich zeigt, sind die Anfangsbereiche 5 der nächstinneren Einzelsaugrohre 3 etwa um ihr jeweiliges Aussendurchmessermass nebeneinander querversetzt am Verteilergehäuse 2 angeschlossen. Mit dem durch die Auffächerung erzielten Querversatz sind die Anfangsbereiche 5 der inneren Einzelsaugrohre 3 zueinander parallel verschoben. Durch entsprechende Auffächerung der inneren Einzelsaugrohre 3 relativ zu den äusseren Einzelsaugrohren 3' werden die jeweiligen Abstände der – in Draufsicht gesehen – maschinenäheren Anfangsbereiche 5 von den Mündungsmitten «M» in der Ebene 9 der Dichtflächen 10 der Anschlüsse 4 entsprechend grösser. Die grösseren Abstände ergeben für die inneren Einzelsaugrohre jeweils grössere Radien und damit grössere Schwingrohrlängen. Es können somit alle Einzelsaugrohre 3, 3' exakt längengleich ausgebildet werden. Falls erforderlich, können durch besonders starke Auffächerung der inneren Einzelsaugrohre 3 gegenüber den äusseren Einzelsaugrohren 3' jeweils sogar grosse Mündungstrichter erreicht werden.

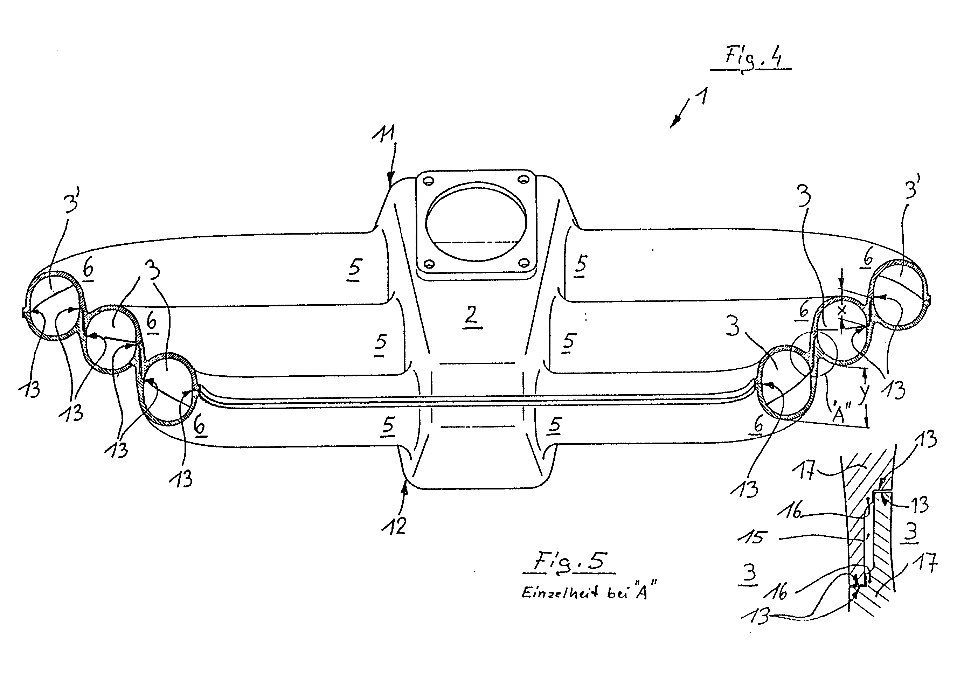

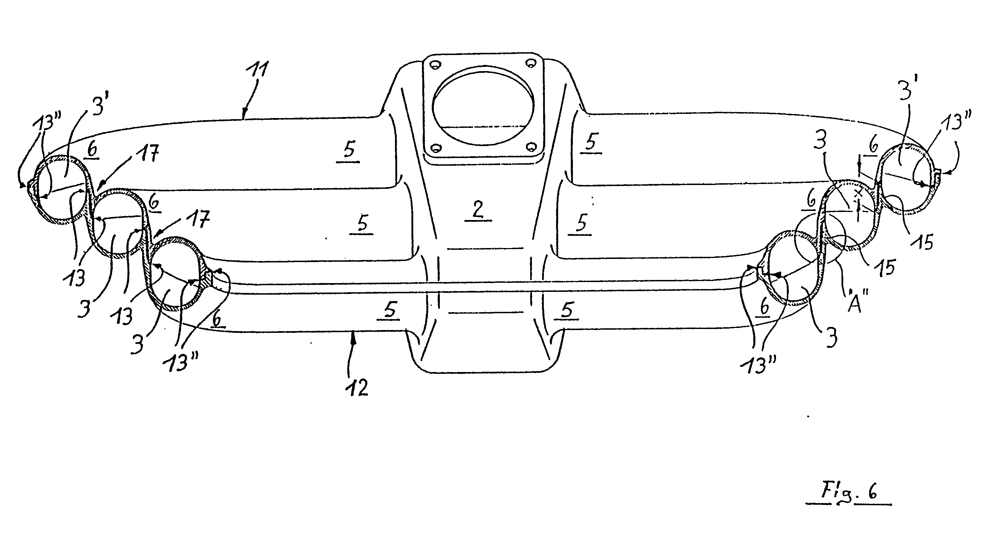

Die Luftansauganlage 1 ist aus längs den Einzelsaugrohren 3, 3' etwa mittig geteilten Druckgussteilen 11, 12 gebildet. Für die Druckgussteile 11, 12 ist eine jeweilige Entformungsrichtung gemäss dem Pfeil «B» festgelegt, die zur Ebene 9 der Dichtflächen 10 parallel gerichtet ist. Zur Ebene 9 sind ferner die Anfangsbereiche 5 parallel querversetzt. Wie die Fig. 3 zeigt, weisen die Gussteile 11, 12 quer zur Entformungsrichtung gemäss Pfeil «B» durch die Einzelsaugrohre 3 verlaufende Formteilflächen auf, in denen Anschlussflächen 13 an einander zugekehrten Wandabschnitten sowie Anschlussflächen 13' des Verteilergehäuses 2 liegen. Wie die Fig. 4 und 5 schliesslich zeigen, stossen die Anschlussflächen 13 stumpf aneinander. Da die Formteilflächen entsprechend den aufgefächerten Einzelsaugrohren 3, 3' treppenartig angeordnet sind, ergeben sich zwischen benachbarten Einzelsaugrohren 3, 3' stufenförmig abgesetzt benachbarte Anschlussflächen 13, Fig. 4. Um den Aufwand an festen und dichtenden Verbindungen zwischen den stumpf aneinanderstossenden Anschlussflächen 13 wesentlich zu verringern, sind zwischen aufgefächerten, mit Abstand benachbarten Einzelsaugrohren 3, 3' an jedem Druckgussteil 11, 12 Zwischenwände 14 angeordnet. Diese verbinden in jedem Druckgussteil 11, 12 die stufenförmig abgesetzt benachbarten Anschlussflächen 13 der Einzelsaugrohre 3, 3' und sind zu den jeweiligen Anschlussflächen 13 quergerichtet angeordnet. Die Zwischenwände 14 sind in Entformungsrichtung gemäss Pfeil «B» der Druckgussteile 11, 12 und ferner in einem geringstmöglichen gegenseitigen Abstand angeordnet. Der relativ lange und schmale, von den Zwischenwänden 14 begrenzte Zwischenraum 15 dient als Drosselstelle zwischen den Paaren lediglich stumpf aufeinanderliegender Anschlussflächen 13 benachbarter Einzelsaugrohre 3, 3'. Um die Dichtwirkung zu erhöhen, weist wenigstens eine von den zwei einander gegenüberliegenden Zwischenwänden 14 je eines Druckgussteiles 11, 12 einen zur anderen Zwischenwand gerichteten Vorsprung 16 zur zusätzlichen Abdichtung auf. Wie Fig. 5 näher zeigt, schliesst der Vorsprung 16 an die jeweilige Anschlussfläche 13 für eine einwandfreie Ausformung des jeweiligen Druckgussteiles 11, 12 unmittelbar an. Der Vorsprung 16 dient weiter zur gegenseitigen Lagesicherung der Druckgussteile 11, 12, wobei diese unmittelbar nach der Entnahme aus der Druckgussform formwarm zusammengebaut und zumindest vorläufig verbunden werden.

Schliesslich sind zu Anfang der Auffächerung und damit im Bereich geringen Querversatzes benachbarter Einzelsaugrohre 3, 3' die Anschlussflächen 13 in gemeinsamen Trennwänden 17 angeordnet. Dabei ist das Abstandsmass X zweier stufenförmig abgesetzt benachbarter Anschlussflächen 13 etwa gleich oder grösser als der Querversatz Y der benachbarten Einzelsaugrohre 3, 3'. Da bei der Luftansauganlage 1 die Verbindungsstellen beider Druckgussteile 11, 12 entlang den stufenförmig abgesetzt benachbarten Anschlussflächen 13 ohne zusätzliche dichtende Verbindungsmittel die benachbarten Einzelsaugrohre 3, 3' so gut wie dicht voneinander abtrennen, genügt es, die beiden Druckgussteile 11 und 12 lediglich entlang der äusseren und inneren Kontur 18 bzw. 19 fest zu verbinden, vorzugsweise zu verschweissen.

Bei dem in Fig. 6 gezeigten und mit dem der Fig. 4 im wesentlichen identischen Ausführungsbeispiel sind gleichartige Ausgestaltungen mit gleichen Bezugsziffern belegt. Leichtmetall-Druckgussteile 11 und 12 dieser Luftansauganlage 1 weisen in den Stossstellen entlang der äusseren und inneren Kontur stufenförmig abgesetzte Anschlussflächen 13" auf. Da diese stufenförmig abgesetzten Anschlussflächen 13" an Leichtmetall-Druckgussteilen 11, 12 sehr lage- und oberflächengenau auszubilden sind, verringert sich damit der Schweissaufwand, es genügt eine relativ geringe Schweisstiefe. Ein «Durchschweissen» bis zur Innenkontur des jeweiligen Einzelsaugrohres 3, 3' zur Erzielung der erforderlichen Dichtheit entfällt, die Innenkontur bleibt glatt und somit strömungsgünstig. Weiter verhindern die Anschlussflächen 13" ein evtl. Auseinanderklaffen der formwarm zusammengebauten Gussteile 11, 12 entlang der äusseren und inneren Kontur der Luftansauganlage 1.

**Patentansprüche**

1. Gegossene Luftansauganlage für Mehrzylinder-Brennkraftmaschinen, insbesondere in Druckgussausführung,
- bestehend aus etwa hälftigen Gussteilen (11, 12),
- die ein Verteilergehäuse (2) und einstückig angeschlossene Einzelsaugrohre (3, 3') umfassen,
- wobei die Einzelsaugrohre (3, 3') von parallelen Anfangsbereichen (5) am Verteilergehäuse (2) über bogenförmig gekrümmte Zwischenbereiche (6) zu gegenüber den Anfangsbereichen (5) quer gerichteten Schlussbereichen (7) mit Anschlüssen (4) für Maschinen-Einlasskanäle überschneidungsfrei verlaufen, und
- wobei ferner von den in Reihe angeordneten Anschlüssen (4) die Einzelsaugrohre (3') der äusseren Einlasskanäle maschinenfern die nächstinneren Einzelsaugrohre (3) jeweils entsprechend maschinennäher am Verteilergehäuse (2) anschliessen, dadurch gekennzeichnet,
- dass die Einzelsaugrohre (3, 3') sich von den maschinenseitigen Schlussbereichen (7) zum Verteilergehäuse (2) hin quer zu der gemeinsamen Mittelebene der Schlussbereiche auffächern und die Anfangsbereiche (5) am Verteilergehäuse (2) quer zueinander versetzt sind,
- dass die Einzelsaugrohre (3, 3') jeweils in Längserstreckung mittig geteilt sind und die quer zur Längserstreckung verlaufenden Teilungsflächen zur gegenseitigen Auflage der Gussteile (11, 12) als Anschlussflächen (13) dienen,
- dass bei jedem der Gussteile (11, 12) die Anschlussflächen (13) der Einzelsaugrohre (3, 3') im Bereich der Auffächerung durch eine Zwischenwand (14) miteinander in Verbindung stehen,
- wobei in der aus den Gussteilen (11, 12) gebildeten Luftansauganlage (1) die Zwischenwände (14) der Gussteile (11, 12) mit geringstmöglichem Abstand einander gegenüberliegen.

2. Luftansauganlage nach Anspruch 1, dadurch gekennzeichnet,
- dass wenigstens eine von zwei einander gegenüberliegenden Zwischenwänden (14) der Gussteile (11, 12) einen zur anderen Zwischenwand gerichteten Vorsprung (16) zur Lagesicherung und/oder Abdichtung aufweist,
- der an die jeweilige Anschlussfläche (13) unmittelbar anschliesst.

3. Luftansauganlage nach Anspruch 1 und 2,
- bei der die Zwischenbereiche (6) der Einzelsaugrohre (3, 3') im Übergang zu den Schlussbereichen (7) eng benachbart angeordnet sind, dadurch gekennzeichnet,
- dass gemeinsame Trennwände (17) im Übergang der Zwischenbereiche (6) zu den Schlussbereichen (7) vorgesehen sind, und
- dass das Abstandsmass (X) zweier – im Querschnitt gesehen – stufenförmig abgesetzt benachbarter Anschlussflächen (13) in einer gemeinsamen Trennwand (17) dem Querversatz (Y) der benachbarten aufgefächerten Einzelsaugrohre (3, 3') entspricht.

4. Luftansauganlage nach den Ansprüchen 1-3, dadurch gekennzeichnet, dass das Abstandsmass der einander gegenüberliegenden Zwischenwände (14) und der Trennwände (17) an beiden Gussteilen (11, 12) im wesentlichen durch das Mass des Wärmeschrumpfens mindestens eines der Gussteile (11, 12) bestimmt ist.

5. Luftansauganlage nach den Ansprüchen 1–4, dadurch gekennzeichnet, dass die Gussteile (11, 12) entlang der äusseren und inneren Kontur der Luftansauganlage (1) zur gegenseitigen Auflage wechselseitig stufenförmig abgesetzte Anschlussflächen (13″) aufweisen.

**Claims**

1. A cast air-intake manifold for multi-cylinder internal combustion engines, especially a manifold of die-cast construction,
   – formed of substantially half-castings (11, 12),
   – which comprise a distributor housing (2) and integrally-attached individual intake pipes (3, 3′),
   – with the individual intake pipes (3, 3′) extending parallel to each other over initial portions (5) at the distributor housing (2) and then by way of arcuately-curved intermediate portions (6) to terminal portions (7) which are directed transversely in relation to the initial portions (5) and which are provided with connections (4) for engine inlet ports without overlap,
   – and wherein the individual intake pipes (3′) of the outer inlet ports furthest from the connections (4) – which are arranged in a row – adjoin the distributor housing (2) at places remote from the engine and the next inner individual intake pipes (3) in each case adjoin the distributor housing (2) correspondingly nearer to the engine, characterised in that
   – the individual intake pipes (3, 3′) fan out over their terminal portions (7) from the machine end to the distributor housing (2) transversely of the common central plane of the terminal portions while the initial portions (5) at the distributor housing (2) are offset transversely of one another,
   – that the individual intake pipes (3, 3′) are each divided centrally in the longitudinal direction and that the separation surfaces which extend transversely of the longitudinal direction serve as connection surfaces (13) for the mutual abutment of the castings (11, 12),
   – that, on each of the castings (11, 12), the connection surfaces (13) of the individual intake pipes (3, 3′) are in connection with one another in the fanning-out region through an intermediate wall (14),
   – while, in the air intake installation (1) formed from the castings (11, 12), the intermediate walls (14) of the castings (11, 12) lie opposite to one another with minimal spacing between them.

2. An air-intake manifold according to claim 1, characterised
   – in that at least one of two mutually-opposite intermediate walls (14) of the castings (11, 12) is provided with a projection (16) which is directed towards the other intermediate wall for positional securing and/or sealing purposes,
   – and which directly adjoins the respective connection surface (13).

3. An air-intake manifold according to claims 1 and 2,
   – in which the intermediate portions (6) of the individual intake pipes (3, 3′) are arranged closely adjacent each other in the transition to the terminal portions (7), characterised
   – in that common partitions (17) are provided in the transition of the intermediate portions (6) to the terminal portions (7), and
   – that the spacing dimension (X) of two connection surfaces (13) which are adjacent in a common partition (17) in an offset manner in step form when seen in cross-section corresponds to the transverse offset (Y) of the adjacent fanned-out individual intake pipes (3, 3′).

4. An air-intake manifold according to claims 1–3, characterised in that the spacing dimension of the mutually-opposite intermediate walls (14) and of the partitions (17) on the two castings (11, 12) is essentially determined by the dimension of the thermal contraction of at least one of the castings (11, 12).

5. An air-intake manifold according to claims 1–4, characterised in that the castings (11, 12) comprise connection surfaces which are offset alternately in step form for mutual support along the outer and inner contours of the air-intake manifold (1).

**Revendications**

1. Ensemble de tubulures d'admission d'air, coulé pour un moteur à combustion interne à plusieurs cylindres notamment un ensemble à injecter,
   – composé de pièces coulées (11, 12) correspondant sensiblement à la moitié,
   – qui comprend un boîtier de répartition (2) et des tubulures d'admission (3, 3′) distinctes, reliées en une seule pièce,
   – les différentes tubulures d'admission (3, 3′) ayant un tracé de zones initiales parallèles (5) au niveau du boîtier de répartition (2) et en passant par des zones intermédiaires (6), recourbées en arc de cercle, jusqu'à des zones d'extrémité (7) dirigées transversalement aux zones initiales (5) munies de moyens de raccordement (4) pour les conduits d'admission du moteur, et cela sans se couper, et
   – en outre parmi les moyens de raccordement (4) en ligne, les tubulures d'admission distinctes (3′) des conduits d'admission extérieurs éloignés du moteur entourant les tubulures d'admission (3), plus proches de l'intérieur et qui sont respectivement plus proches du moteur au niveau du boîtier de répartition (2), ensemble caractérisé en ce que:
   – les différentes tubulures d'admission (3, 3′) se déploient à partir des zones de raccordement (7) situées du côté du moteur jusque vers le boîtier de répartition (2), transversalement au plan médian commun des zones d'extrémité et en ce que les zones initiales (5) sont décalées au niveau du boîtier de répartition (2),
   – en ce que les différentes tubulures d'admission (3, 3′) sont chaque fois divisées en leur milieu suivant leur direction longitudinale et les surfaces de division qui correspondent à l'extension longitudinale servent de surfaces de raccordement (13) pour l'appui réciproque des pièces injectées (11, 12),

– en ce que pour chaque pièce injectée (11, 12), les surfaces de raccordement (13) des différentes tubulures (3, 3′) sont reliées par une cloison (14) au niveau du déploiement en éventail,

– et dans l'ensemble de tubulures d'admission (1) formées par des pièces injectées (11, 12), les cloisons (14) des pièces injectées (11, 12) sont l'une en regard de l'autre avec la plus grande distance.

2. Ensemble de tubulures d'admission d'air selon la revendication 1, caractérisé en ce que:

– au moins l'une des deux cloisons en regard (14) des pièces coulées (11, 12) présente une partie en saillie (16) dirigée vers l'autre cloison pour le blocage en position et/ou l'étanchéité,

– cette partie en saillie étant directement adjacente à la surface de raccordement respective (13).

3. Ensemble de tubulures d'admission d'air selon les revendications 1 et 2,

– dans lequel les zones intermédiaires (6) des différentes tubulures d'admission (3, 3′) sont étroitement adjacentes dans la transition vers les zones d'extrémité (7), caractérisé en ce que:

– des cloisons communes (17) sont prévues dans la transition des zones intermédiaires (6) vers les zones d'extrémité (7) et

– en ce que la distance (X) de deux surfaces de raccordement (13) adjacentes, décalées en gradins (en vue en coupe) ont dans une cloison commune (17) le décalage (Y) des différentes tubulures d'admission (3, 3′) voisines, déployées en éventail.

4. Ensemble de tubulures d'admission d'air selon les revendications 1 à 3, caractérisé en ce que la distance des cloisons (14) en regard et des cloisons (17) des deux pièces injectées (11, 12) est déterminée principalement par le degré de retrait d'au moins l'une des pièces injectées (11, 12).

5. Ensemble de tubulures d'admission d'air selon les revendications 1 à 4, caractérisé en ce que les pièces injectées (11, 12) ont des surfaces de raccordement (13″) décalées alternativement en gradins le long du contour externe et du contour interne de l'ensemble de tubulures d'admission d'air (1) pour servir d'appuis réciproques.

Fig. 1

Fig. 2

Fig. 3

Fig. 4

Fig. 5
Einzelheit bei "A"

Fig. 6